# FASCICULE DE BREVET EUROPEEN

(11) **EP 2 768 706 B1**
(45) Date de publication et mention de la délivrance du brevet: **31.08.2016**
(21) Numéro de dépôt: 12781369.9
(22) Date de dépôt: 08.10.2012
(51) Int. Cl.: B60S 3/04, B05B 7/24

(54) **DISPOSITIF DE LAVAGE ET VEHICULE DE LAVAGE AINSI EQUIPEE, CABINE DE LAVAGE ET STATION DE LAVAGE AINSI EQUIPEE**
WASCHVORRICHTUNG UND WASCHFAHRZEUG MIT EINER SOLCHEN VORRICHTUNG SOWIE FAHRZEUGWASCHANLAGE UND WASCHSTATION MIT DIESER VORRICHTUNG
WASHING DEVICE AND WASHING VEHICLE EQUIPPED WITH SAID DEVICE, CAR WASH AND WASHING STATION EQUIPPED WITH SAID DEVICE

(30) Priorité: 19.10.2011 FR 1159432
(43) Date de publication de la demande: 27.08.2014
(73) Titulaire: SP@RE, 75012 Paris (FR)
(72) Inventeur: DARVES-BORNOZ, Thierry, 75005 Paris (FR)
(74) Mandataire: Labaune, Anne-Lise
(86) Numéro de dépôt international: PCT/FR2012/052279
(87) Numéro de publication internationale: WO 2013/057411

(56) Documents cités:
- DE-A1- 4 318 060
- DE-A1- 10 241 829
- DE-A1- 10 310 590
- US-A- 5 381 962
- US-A1- 2005 005 949
- US-A1- 2009 133 726

## Description

La présente invention se rapporte notamment au domaine des stations de lavage, notamment au domaine des stations de lavage par jet haute pression destinées aux véhicules légers. Elle se rapporte en particulier aux dispositifs de lavage utilisés dans de telles stations, notamment ceux utilisant des lances.

Il est connu que de telles stations comprennent des cabines de lavage, autrement nommées pistes de lavage, chacune des cabines étant prévue pour y stationner un véhicule léger. Chaque cabine comprend un dispositif de lavage ancré au plafond de la cabine et comprenant une lance destinée à projeter de l'eau sous pression et/ou tout autre liquide de lavage. Le dispositif est généralement adapté pour tourner autour de son ancrage, de sorte que la lance peut être déplacée sensiblement sans contrainte tout autour du véhicule. Plusieurs liquides de lavages peuvent être utilisés, notamment de l'eau chaude savonneuse pour le nettoyage en tant que tel, de l'eau froide pour le rinçage ou de l'eau déminéralisée additionnée de cire pour la protection de la carrosserie ainsi lavée.

Pour sélectionner le type de liquide, l'utilisateur de la cabine doit se déplacer jusqu'à un coffret de commande généralement situé contre une cloison de la cabine de lavage. Le temps de déplacement jusqu'au coffret est décompté du temps de lavage, et du liquide s'écoule durant ce temps de la lance, en pure perte.

Le document US5381962 A décrit un dispositif de lavage selon le préambule de la revendication 1.

L'invention a notamment pour but de proposer un dispositif de lavage qui permette de réduire les pertes de temps et de liquide. D'autres avantages et d'autres buts apparaîtront de la description qui suit.

Selon l'invention, un tel dispositif de lavage comprend une lance équipée d'une poignée pour sa manutention, des moyens d'alimentation en eau pour la lance, des moyens d'alimentation électrique de la lance, et des moyens de fixation à une paroi, les moyens de fixation définissant un axe de rotation pour les moyens d'alimentation en eau, les moyens d'alimentation électrique comprenant un câble d'alimentation électrique amont, un câble d'alimentation électrique aval, chacun comprenant au moins un conducteur, et un collecteur pour assurer une continuité d'alimentation entre le câble amont et le câble aval, le câble amont étant fixe relativement à la paroi, le collecteur comprenant une partie à laquelle le câble amont est électriquement connecté et une partie mobile à laquelle le câble aval est électriquement connecté, le collecteur étant conçu pour permettre une rotation de la partie mobile relativement à la partie fixe, autour de l'axe, de préférence une rotation angulairement illimitée.

Les moyens d'alimentation électrique et les moyens d'alimentation en eau peuvent définir des circuits d'alimentation parallèles entre eux.

L'une des parties fixe ou mobile du collecteur peut comprendre des bagues conductrices, chacune reliée à un conducteur respectif du câble amont, de préférence la partie fixe. Chaque bague peut former une gorge sensiblement torique et radialement ouverte vers l'extérieur, l'autre partie comprenant des anneaux conducteurs, chacun prévu pour coulisser dans une gorge respective et électriquement connecté à un conducteur respectif du câble aval.

Les moyens d'alimentation électrique peuvent être prévus pour alimenter des moyens de commande, lesdits moyens de commande étant prévus pour sélectionner un programme ou une phase d'un programme de lavage. Les moyens d'alimentation électrique peuvent être prévus pour alimenter des moyens sonores et/ou lumineux, notamment des moyens d'éclairage et/ou des témoins lumineux. Les moyens d'alimentation électrique peuvent en outre être prévus pour alimenter des moyens de chauffage électrique, lesdits moyens de chauffage électrique étant prévus pour chauffer les moyens d'alimentation en eau, de façon notamment à éviter les problèmes de gel en hiver.

Selon un autre objet, l'invention porte aussi sur une cabine de lavage qui comprend un dispositif selon l'invention, la susdite paroi étant de préférence un plafond de la cabine et l'axe étant de préférence sensiblement vertical. L'invention porte aussi sur une station de lavage qui comprend une telle cabine.

Selon encore un autre objet, l'invention porte aussi sur véhicule de lavage qui comprend un dispositif selon l'invention, la susdite paroi étant de préférence une paroi supérieure d'un réservoir équipant le véhicule.

Plusieurs modes d'exécution de l'invention seront décrits ci-après, à titre d'exemples non limitatifs, en référence aux dessins annexés dans lesquels :
- la figure 1 est une vue transversale d'une cabine de lavage selon l'invention, équipée d'un dispositif de lavage selon l'invention ;
- la figure 2 est une vue schématique d'un bras pour le dispositif de lavage de la figure 1 ;
- la figure 3 est une vue schématique et en coupe d'un ancrage et de moyens d'alimentation pour le dispositif d'alimentation ;
- la figure 4 est une vue éclatée et partiellement coupée du dispositif d'alimentation et de l'amorce du bras ;
- la figure 5 est une vue latérale d'un collecteur électrique pour le dispositif d'alimentation des figures 3 et 4 ;
- la figure 6 est une vue en perspective du collecteur de la figure 5 ; et,
- la figure 7 est une vue de détail en coupe axiale du collecteur des figures 5 et 6.

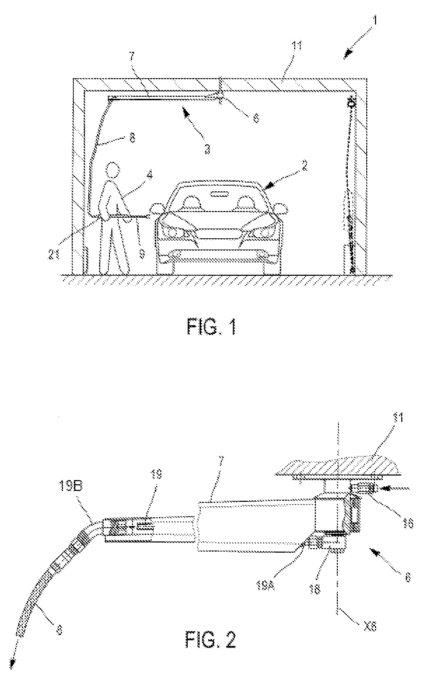

La figure 1 illustre une cabine de lavage 1 pour un véhicule léger 2. Cette cabine est équipée d'un dispositif de lavage 3, pour le lavage manuel du véhicule 2 par un utilisateur 4, avec un liquide fourni sous pression.

Le dispositif 3 comprend de l'amont vers l'aval, dans le sens d'écoulement du liquide, une platine de fixation 6, un bras 7, un tuyau souple 8 et une lance 9. La platine 6 est conçue pour la fixation du dispositif 3 au plafond 11 de la cabine 1, sensiblement au centre dudit plafond 11. Le bras 7 s'étend sensiblement horizontalement depuis la platine 6, la platine constituant un pivot pour la rotation du bras autour d'un axe X6 de la platine 6. Le tuyau 8 permet de raccorder vers le bas le bras 7 et la lance 9, en donnant suffisamment de souplesse pour la manipulation de la lance 9 par l'utilisateur 4. La lance est suffisamment rigide pour permettre de diriger le jet de liquide sous pression vers le véhicule 2.

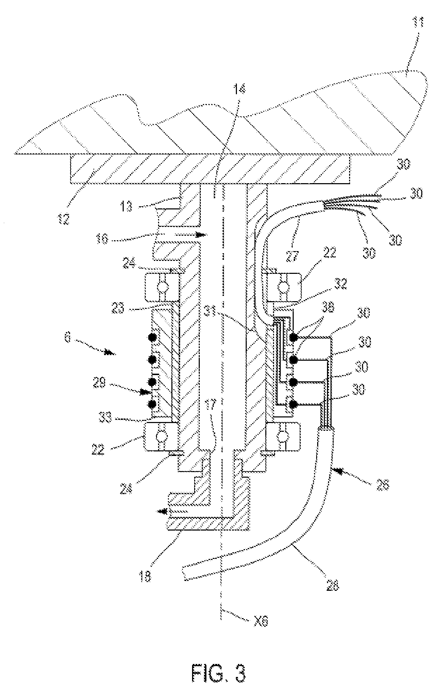

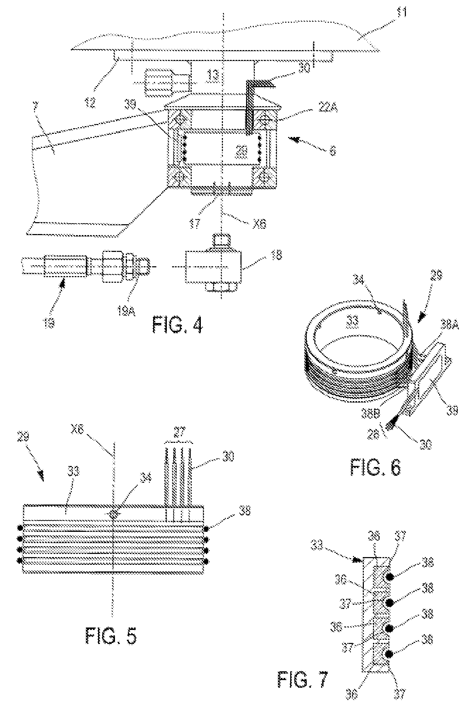

On va maintenant décrire plus en détail la platine 6, notamment en référence aux figures 3 et 4.

La platine 6 est sensiblement de révolution autour de l'axe X6, lequel est sensiblement vertical. La platine 6 comprend une plaque 12 et un arbre creux 13, formant un ensemble rigide. La plaque 12 permet la fixation de la platine sous le plafond 11 de la cabine 1. L'arbre creux 13 s'étend verticalement vers le bas depuis la plaque 12. L'arbre 13 est sensiblement cylindrique autour de l'axe X6 et il forme avec la plaque 12 une cavité intérieure 14. L'arbre 13 porte dans sa partie supérieure, une arrivée de liquide 16 permettant de faire arriver latéralement dans la cavité 14 le liquide de lavage formé et mis sous pression en amont, dans des moyens non représentés aux figures. En partie basse, l'arbre 13 est percé d'une sortie de liquide 17 sur laquelle est monté un raccord hydraulique tournant 18. Le raccord 18 est monté en rotation autour de l'axe X6 relativement à l'arbre 13.

Comme particulièrement illustré à la figure 2, le raccord 18 permet d'amener le liquide de lavage depuis la cavité 14 en direction du bras 7. Le bras 7 porte une canalisation rigide (ou souple) 19, branchée par une première extrémité 19A au raccord tournant 18 et par une deuxième extrémité 19B au tuyau souple 8.

Ainsi, la platine 6 propose un circuit 16, 14, 17, 18 d'alimentation en liquide de lavage pour le dispositif de lavage 3. La lance comprend une poignée 21 qui commande l'éjection ou l'arrêt du jet de liquide de lavage en extrémité de la lance 9.

Le bras 7 est, quant à lui, monté en rotation sur l'arbre 13, grâce à des roulements à billes 22 séparés entre eux par une entretoise 23, l'ensemble étant maintenu axialement (selon l'axe X6) entre deux circlips 24. L'entretoise 23 est fixe relativement à l'arbre creux 13, de sorte qu'ainsi montée elle est fixe relativement au plafond 11 de la cabine 1.

Selon l'invention, la poignée 21 comprend aussi des moyens de commande électrique (non représentés aux figures). Dans l'exemple illustré, ces moyens de commande électrique sont notamment conçus pour permettre de choisir la composition du liquide de lavage parmi de l'eau chaude savonneuse pour le nettoyage en tant que tel, de l'eau froide pour le rinçage ou de l'eau déminéralisée additionnée de cire pour la protection de la carrosserie ainsi lavée.

Les moyens de commande électrique sont disposés sur la lance 9, de sorte qu'ils sont accessibles directement à l'utilisateur 2, sans qu'il ait à se déplacer jusqu'à un tableau de commande. Les moyens de commande sont alimentés électriquement par un circuit 26 d'alimentation électrique parallèle au circuit 16, 14, 17, 18 d'alimentation en liquide.

Comme particulièrement illustré à la figure 3, le circuit d'alimentation électrique comprend un câble amont 27, fixe relativement au plafond 11, un câble aval 28, mobile avec le bras 7 et, un collecteur 29, permettant d'alimenter le câble aval 28 à partir du câble amont 27. Le collecteur 29 est monté autour de l'entretoise 23 entre les roulements 22. Une rainure 31 est formée dans la paroi de l'arbre 13, ouverte à l'extérieur de l'arbre et parallèle à l'axe de platine X6. La rainure 31 permet d'acheminer le câble amont 27 depuis le haut, sous le roulement à bille supérieur 22A, jusqu'au collecteur 29, au travers d'une échancrure 32 de l'entretoise 23. Dans l'exemple illustré, chaque câble comprend quatre conducteurs 30 indépendants permettant d'alimenter des éclairages à LED RGB ou plusieurs commandes électriques.

On va maintenant décrire le collecteur, notamment en référence aux figures 3 et 5 à 7.

Le collecteur 29 comprend une base sensiblement cylindrique 33, dont le diamètre intérieur est ajusté au diamètre extérieur de l'entretoise 23 ; la base 33 est fixée sur l'entretoise 23 par quatre goupilles 34, de sorte que la base 33 et l'entretoise 13 sont solidaires entre elles ; ainsi, la base est maintenue fixe relativement au plafond 11 de la cabine 1.

Dans l'exemple illustré, la base 33 porte quatre bagues 36. Les bagues sont solidaires de la base, elles ont un diamètre maximal identique au diamètre maximal de la base 33 ; elles sont radialement incrustées dans la périphérie de la base. Les bagues 36 sont électriquement isolées l'une de l'autre. Chaque conducteur 30 du câble amont 27 est électriquement relié à une bague respective 36.

Chaque bague 36 forme une gorge 37, torique et radialement ouverte vers l'extérieur. La base 33, les bagues 36 et leurs gorges 37, électriquement reliées au câble amont forment ensemble la partie fixe du collecteur 29.

Le collecteur comprend en outre quatre anneaux conducteurs 38. Chaque anneau 38 est prévu pour venir en prise glissante dans une gorge 37 respective. Dans l'exemple décrit, chaque anneau est élastique, de sorte qu'il vient se plaquer au fond de sa gorge respective ; dans cet exemple, l'anneau ne forme pas un tour complet, il est formé d'un fil formant une portion de cercle et, chaque extrémité 38A, 38B du fil formant au-delà de cette portion de cercle, un segment qui s'éloigne progressivement de l'axe X6 et vient se raccorder à une plaque de dérivation 39. Dans la plaque de dérivation, chaque anneau 38 est raccordé par ses extrémités 38A, 38B à un conducteur 30 du câble aval 28. La plaque de dérivation 39 est solidairement fixée au bras 7. Ainsi, la plaque 39 et les anneaux 38, qui y sont fixés et sont électriquement reliés au câble amont 28, forment ensemble une partie du collecteur 29 mobile en rotation autour de l'axe X6.

Avantageusement, le bras et/ou la lance peut comporter des témoins lumineux, chacun correspondant à un liquide particulier. Une lumière rouge peut correspondre au lavage à l'eau chaude savonneuse, une lumière bleue au rinçage à l'eau froide, et, une lumière verte à la protection à la cire. Ainsi, un tel affichage peut permettre à un utilisateur attendant qu'une cabine se libère, lorsque toutes les cabines d'une station de lavage sont déjà occupées, de choisir celle dont le bras et/ou la lance est éclairé en vert, signe que le lavage touche à sa fin et que la cabine va bientôt être libérée.

Le dispositif, notamment sur le bras et/ou la lance, peut aussi comprendre des moyens de sonorisation aptes à donner des instructions ou des informations à l'utilisateur; par exemple: temps de lavage restant ou programme sélectionné.

Bien sûr, l'invention n'est pas limitée aux exemples qui viennent d'être décrits , mais est définie par les revendications.

Les anneaux et les bagues à gorges peuvent être remplacés par un collecteur à balais. Alternativement à l'objet de l'invention, il peut être prévu qu'au lieu du collecteur, le câble amont et le câble aval ne forment qu'un seul et même câble, ce même câble formant une boucle laissant suffisamment de "mou" pour qu'un utilisateur portant la lance puisse faire au moins un tour complet de son véhicule.

Il peut aussi être prévu que l'alimentation électrique alimente une torche électrique disposée sur la lance, de sorte que cette torche puisse illuminer une zone mal éclairée de la carrosserie du véhicule en cours de lavage.

Il peut en outre être prévu que l'alimentation électrique alimente des moyens de chauffage électrique prévus pour chauffer les moyens d'alimentation en liquide, notamment la canalisation 19 du bras 7, le tuyau souple 8 et/ou la lance 9. Il est ainsi possible d'utiliser le dispositif de lavage 3 même lorsque la température dans la cabine de lavage 1 est très basse.

La cabine de lavage peut constituer une station de lavage à elle seule. Une même station de lavage peut comprendre une ou plusieurs cabines selon l'invention.

Un dispositif de lavage selon l'invention peut aussi être utilisé sur un véhicule, notamment un véhicule utilisé pour le nettoyage des rues. Il peut alors être fixé sur la paroi supérieure d'un réservoir d'eau équipant le véhicule. Un signal sonore et/ou lumineux peut alors équiper le dispositif, notamment pour accroitre la sécurité des passants.

## Revendications

1. Dispositif (3) de lavage, comprenant:
- une lance équipée d'une poignée pour sa manutention ;
- des moyens d'alimentation en eau (16, 13, 18, 19, 8) pour la lance (9) ;
- des moyens d'alimentation électrique (27, 28, 29) de la lance (9) ; et,
- des moyens de fixation (6) à une paroi (11), lesdits moyens de fixation (6) définissant un axe de rotation (X6) pour les moyens d'alimentation en eau,
**caractérisé en ce que** les moyens d'alimentation électrique comprennent un câble d'alimentation électrique amont (27), un câble d'alimentation électrique aval (28), chacun comprenant au moins un conducteur (30), et un collecteur (29) pour assurer une continuité d'alimentation entre le câble amont et le câble aval, ledit câble amont étant fixe relativement à la paroi (11), ledit collecteur comprenant une partie fixe (33, 36) à laquelle ledit câble amont est électriquement connecté et une partie mobile (28, 39) à laquelle ledit câble aval est électriquement connecté, ledit collecteur étant conçu pour permettre une rotation de la partie mobile relativement à la partie fixe, autour de l'axe (X6), de préférence une rotation angulairement illimitée.

2. Dispositif selon la revendication 1,
**caractérisé en ce que** les moyens d'alimentation électrique et les moyens d'alimentation en eau définissent des circuits d'alimentation parallèles entre eux.

3. Dispositif selon la revendication 1,
**caractérisé en ce que** l'une des parties (33,36 ; 28,39) fixe ou mobile du collecteur comprend des bagues conductrices, chacune reliée à un conducteur (30) respectif du câble amont (27), de préférence la partie fixe (33, 36).

4. Dispositif selon la revendication 3,
**caractérisé en ce que** chaque bague (36) forme une gorge sensiblement torique et radialement ouverte vers l'extérieur, l'autre partie comprenant des anneaux conducteurs (38), chacun prévu pour coulisser dans une gorge (36) respective et électriquement connecté à un conducteur (30) respectif du câble aval (28).

5. Dispositif selon l'une des revendications 1 à 4,
**caractérisé en ce que** les moyens d'alimentation électrique sont prévus pour alimenter des moyens de commande, lesdits moyens de commande étant prévus pour sélectionner un programme ou une phase d'un programme de lavage.

6. Dispositif selon l'une des revendications 1 à 5,
**caractérisé en ce que** les moyens d'alimentation électrique sont prévus pour alimenter des moyens sonores et/ou lumineux, notamment des moyens d'éclairage et/ou des témoins lumineux.

7. Dispositif selon l'une des revendications 1 à 6,
**caractérisé en ce que** les moyens d'alimentation électrique sont prévus pour alimenter des moyens de chauffage électrique, lesdits moyens de chauffage électrique étant prévus pour chauffer les moyens d'alimentation en eau.

8. Cabine de lavage (1),
**caractérisée en ce qu'**elle comprend un dispositif (3) selon l'une des revendications précédentes, ladite paroi étant de préférence un plafond (11) et ledit axe (X6) étant de préférence sensiblement vertical.

9. Station de lavage,
**caractérisée en ce qu'**elle comprend une cabine (1) selon la revendication 8.

10. Véhicule de lavage,
**caractérisé en ce qu'**il comprend un dispositif (3) selon l'une des revendications 1 à 7, ladite paroi étant de préférence une paroi supérieure d'un réservoir équipant ledit véhicule.

## Patentansprüche

1. Waschvorrichtung (3),
**dadurch gekennzeichnet, dass** die Vorrichtung folgende Komponenten umfasst:
- eine Waschlanze mit Haltegriff;
- Wasserzuführvorrichtungen (16, 13, 18, 19, 8) für die Lanze (9);
- Stromversorgungsvorrichtungen (27, 28, 29) für die Lanze (9); und
- Vorrichtungen zur Befestigung (6) an einer Wand (11), wobei die genannten Befestigungsvorrichtungen (6) für die Wasserzuführvorrichtungen sowie die Stromversorgungsvorrichtungen, welche jeweils ein netzseitiges Stromversorgungskabel (27) und ein geräteseitiges Stromversorgungskabel (28) beinhalten, eine Drehachse (X6) bilden, die Kabel jeweils aus mindestens einem Leiter (30) und einem Stromabnehmer (29) zur Sicherstellung einer unterbrechungsfreien Stromversorgung zwischen dem netzseitigen Kabel und dem geräteseitigen Kabel 15 bestehen, wobei das genannte netzseitige Kabel an der Wand (11) fest angebracht ist und der genannte Stromabnehmer aus einem unbeweglichen Teil (33, 36), an dem das genannte netzseitige Kabel elektrisch angeschlossen ist, und einem beweglichen Teil (28, 39), an dem das geräteseitige Kabel elektrisch angeschlossen ist, besteht, und der genannte Stromabnehmer so konzipiert ist, dass dessen unbeweglicher Teil in Bezug auf dessen beweglichen Teil um die Achse (X6) vorzugsweise mit einem begrenzten Drehwinkel drehbar ist.

2. Vorrichtung nach Anspruch 1,
**dadurch gekennzeichnet, dass** die Stromversorgungsvorrichtungen und die Wasserzuführvorrichtungen als zueinander parallel verlaufende Versorgungskreise ausgeführt sind.

3. Vorrichtung nach Anspruch 1,
**dadurch gekennzeichnet, dass** einer der unbeweglichen bzw. beweglichen Teile (33,36; 28,39) des Stromabnehmers mit Schleifringen ausgestattet ist, die jeweils mit einem entsprechenden Leiter (30) des netzseitigen Kabel (27), vorzugsweise mit dessen festem Teil (33, 36) verbunden sind.

4. Vorrichtung nach Anspruch 3,
**dadurch gekennzeichnet, dass** jeder Ring (36) eine im Wesentlichen O-ringförmige Rille bildet, die radial nach außen hin geöffnet ist, und der andere Teil mit Gleitringen (38) versehen ist, die jeweils in der entsprechenden Rille (36) gleiten, und mit dem entsprechenden Leiter (30) des geräteseitigen Kabels (28) elektrisch verbunden sind.

5. Vorrichtung nach einem der Ansprüche 1 bis 4,
**dadurch gekennzeichnet, dass** die Stromversorgungsvorrichtungen zur Versorgung von Steuergeräten vorgesehen sind, wobei die Steuergeräte dazu dienen, ein Waschprogramm bzw. eine Phase eines Waschprogramms auszuwählen.

6. Vorrichtung nach einem der Ansprüche 1 bis 5,
**dadurch gekennzeichnet, dass** die Stromversorgungvorrichtungen der Versorgung von akustischen bzw. optischen Signalgebern dienen, insbesondere von Beleuchtungen bzw. Signallampen.

7. Vorrichtung nach einem der Ansprüche 1 bis 6,
**dadurch gekennzeichnet, dass** die Stromversorgungsvorrichtungen der Versorgung von elektrischen Heizvorrichtungen dienen, und die elektrischen Heizvorrichtungen für die Beheizung der Wasserzuführvorrichtungen vorgesehen sind.

8. Waschkabine (1),
**dadurch gekennzeichnet, dass** die Kabine eine Vorrichtung (3) nach einem der vorhergehenden Ansprüche beinhaltet, wobei sich die genannte Wand vorzugsweise im Deckenbereich befindet (11) und die genannte Achse (X6) im Wesentlichen vertikal ausgerichtet ist.

9. Waschanlage, **dadurch gekennzeichnet, dass** die Anlage mit einer Kabine (1) nach dem vorhergehenden Anspruch 8 ausgestattet ist.

10. Waschfahrzeug,
**dadurch gekennzeichnet, dass** das Fahrzeug eine Vorrichtung (3) nach einem der Ansprüche 1 bis 7 enthält, wobei die genannte Wand vorzugsweise durch eine obere Behälterwand eines Vorratstanks gebildet wird, mit dem das Fahrzeug ausgestattet ist.

## Claims

1. A washing device (3);
**characterized in that** it is comprised of:
- a lance (wand), equipped with a handle, for manipulating the lance;
- means of feeding water (16, 13, 18, 19, 8) for the lance (9);
- means of supplying electricity (27, 28, 29) for the lance (9); and
- means of fixing (6) to a wall (11), which means of fixing (6) define an axis of rotation (X6) for the water feed means,
wherein the electricity supply means comprise a forward electrical supply cable (27) and a return electrical supply cable (28), each of which comprises at least one conductor (30) and a collector (29), to enable continuous supply of electricity between the forward cable and return cable, wherein the forward cable is fixed in relation to the wall (11), wherein the collector comprises a fixed part (33, 36) to which the forward cable is electrically connected and a mobile part (28, 39) to which the return cable is electrically connected, and wherein the collector is designed so as to enable rotation of the mobile part relative to the fixed part, around the axis (X6), preferably a rotation not subject to limitation as to the angle of rotation.

2. The device according to claim 1;
**characterized in that** the electricity supply means and the water feed means define supply circuits which are mutually parallel.

3. The device according to claim 1;
**characterized in that** one of the fixed or mobile parts (33, 36; 28, 39) of the collector is comprised of conductive generally cylindrical elements, each of which is connected to a respective conductor (30) of the forward cable (27), preferably the fixed part (33, 36).

4. The device according to claim 3;
**characterized in that** each generally cylindrical element (36) forms a recess which is generally toroidal and is open toward the exterior, and which is associated with a ring-shaped conductor (38) which is configured to slide in a respective recess (36) [sic] and which is connected to a respective conductor (30) of the forward cable (28).

5. The device according to one of claims 1-4;
**characterized in that** the electricity supply means are arranged to supply [electricity to] control means which are configured to select a washing program, or a phase of a washing program.

6. The device according to one of claims 1-5;
**characterized in that** the electricity supply means are arranged to supply [electricity to] audio and/or lighting means, particularly means of illumination and/or pilot light and indicator light means.

7. The device according to one of claims 1-6;
**characterized in that** the electricity supply means are arranged to supply electricity to electrical heating means, for heating the water feed means.

8. An enclosure (or box) (1) for washing;
**characterized in that** it is comprised of a device (3) according to one of the preceding claims, wherein the aforesaid wall is preferably a ceiling (11), and the aforesaid axis (X6) is preferably a generally vertical axis.

9. A washing station;
**characterized in that** it is comprised of an enclosure or box (1) according to one of the preceding claims.

10. A vehicle for washing;
**characterized in that** it is comprised of a device (3) according to one of claims 1-7, wherein the aforesaid wall is preferably an upper wall of a tank provided on said vehicle.
